# EUROPÄISCHE PATENTANMELDUNG

(11) **EP 3 395 528 A1**
(43) Veröffentlichungstag der Anmeldung: **31.10.2018**
(21) Anmeldenummer: 17167767.7
(22) Anmeldetag: 24.04.2017
(51) Int. Cl.: B29B 17/00, D21C 5/02

(54) **WERKSTOFF ERHÄLTLICH DURCH VERPRESSEN**

(71) Anmelder: Kugi, Wolfgang, 9602 Thörl - Maglern (AT)
(72) Erfinder: Kugi, Wolfgang, 9602 Thörl - Maglern (AT)
(74) Vertreter: Dennemeyer & Associates S.A.

(57) **Zusammenfassung**

Es wird ein Werkstoff beschrieben, der durch Verpressen eines Gemisches umfassend Polyurethan und Papier unter einem Druck von mindestens 20 bar erhältlich ist.

## Beschreibung

Die vorliegende Erfindung stellt einen Werkstoff bereit, welcher durch Pressen bzw. Verpressen erhältlich ist.

### Hintergrund

Vor dem Hintergrund knapper Resourcen und dem Wunsch nach Wiederverwendung bereits früher verwendeter Materialien, also nach einem Recycling von werthaltigen Substanzen werden Forschungen auf verschiedenen technischen Gebieten durchgeführt. Die vorliegende Erfindung liegt auf dem Gebiet der Werkstoffwissenschaften.

### Zusammenfassung der Erfindung

Es ist eine Aufgabe der vorliegenden Erfindung einen formstabilen Werkstoff bereitzustellen.

Hierbei ist es ferner eine Aufgabe der vorliegenden Erfindung einen Werkstoff bereitzustellen, welcher in der Herstellung und Verwendung eine verbesserte Umwelt- und Ressourcenschonung erzielt.

In diesem Zusammenhang ist es auch eine Aufgabe der vorliegenden Erfindung einen Werkstoff bereitzustellen, der aus einem Materialgemisch besteht, welches eine direkte Herstellung des Werkstoffs durch ein Formgebungsverfahren ohne Erfordernis einer weiteren Nachbearbeitung ermöglicht.

Zur Lösung der vorstehenden Aufgabe(n) stellt die vorliegende Erfindung einen Werkstoff bereit, der durch Verpressen eines Gemisches umfassend Polyurethan und Papier unter einem Druck von mindestens 20 bar erhältlich ist.

In bevorzugten Ausführungsformen ist der erfindungsgemäße Werkstoff durch Verpressen unter einem Druck von mindestens 20 bar, weiter bevorzugt unter einem Druck von über 20 bar erhältlich. Es ist ferner bevorzugt, dass der erfindungsgemäße Werkstoff durch Verpressen unter einem Druck von höchstens 1500 bar, weiter bevorzugt unter einem Druck von unter 1500 bar erhältlich ist. Der Werkstoff ist insgesamt besonders bevorzugt durch Verpressen unter einem Druck von mindestens gleich oder größer 20 bar bis hin zu einem Druck von gleich oder kleiner 1500 bar erhältlich.

In einer bevorzugten Ausführungsform besteht das Gemisch aus Polyurethan und Papier, wobei dann vorzugsweise das Polyurethan 5 bis 70 Gew.-%, mehr bevorzugt 10 bis 65 Gew.-%, weiter bevorzugt 15 bis 60 Gew.-%, noch weiter bevorzugt 20 bis 55 Gew.-%, weitergehend bevorzugt 25 bis 50 Gew.-%, darüber hinaus bevorzugt 30 bis 45 Gew.-% und am meisten bevorzugt 35 bis 40 Gew.-% des Gesamtgewichts des Gemisches aus Polyurethan und Papier und das Papier die übrigen Gew.-%, d.h. die jeweilige Differenz gegenüber 100 Gew.-% des Gesamtgewichts des Gemisches aus Polyurethan und Papier ausmacht. Ein mit einem derartigen Gemisch hergestellter Werkstoff ist insbesondere vorteilhaft bei der Entsorgung, da eine Verbrennung und damit thermische Nutzung möglich gemacht wird. Aus diesem Grund besteht der Werkstoff in einer besonders bevorzugten Ausführungsform ausschließlich aus dem Gemisch aus Polyurethan und Papier.

Ein erfindungsgemäßer Werkstoff enthält ferner als Papier bevorzugt Altpapier. Ein derartiger Werkstoff ist bei der Herstellung besonders ressourcenschonend.

Zudem ist es bevorzugt, dass das Papier in dem erfindungsgemäßen Werkstoff aus Papierschnipseln mit einer mittleren Größe von bevorzugt 0,01 bis 60 cm², mehr bevorzugt 0,05 bis 6 cm², noch mehr bevorzugt 0,10 bis 5 cm², weitergehend bevorzugt 0,20 bis 4,50 cm², noch weiter bevorzugt 0,25 bis 4,00 cm², insbesondere bevorzugt 0,50 bis 3,50 cm², besonders bevorzugt 1,00 bis 3,00 und am meisten bevorzugt 1,50 bis 2,50 cm² besteht. Derartige Papierschnipsel zeichnen sich in der Mischung mit dem Polyurethan durch gute Druckfestigkeit sowie ein vorteilhaftes Quell-Schwindverhalten aus.

Es ist zudem bevorzugt, dass der erfindungsgemäße Werkstoff eine Zugfestigkeit in Faserrichtung angelehnt an die ÖNORM EN 408 - Holzbauwerke -Bauholz für tragende Zwecke und Brettschichtholz (Ausgabe 2010-12-01, Punkt 13) im Bereich von 40 N/mm² bis 100 N/mm² aufweist.

Es ist zudem bevorzugt, dass der erfindungsgemäße Werkstoff eine Druckfestigkeit in Faserrichtung angelehnt an die ÖNORM EN 408 - Holzbauwerke - Bauholz für tragende Zwecke und Brettschichtholz (Ausgabe 2010-12-01, Punkt 15) im Bereich von 30 N/mm² bis 80 N/mm² aufweist.

Es ist zudem bevorzugt, dass der erfindungsgemäße Werkstoff eine Biegefestigkeit in Faserrichtung angelehnt an die ÖNORM EN 408 - Holzbauwerke - Bauholz für tragende Zwecke und Brettschichtholz (Ausgabe 2010-12-01, Punkt 19) im Bereich von 40 N/mm² bis 120 N/mm² aufweist.

Es ist zudem bevorzugt, dass der erfindungsgemäße Werkstoff einen Brennwert (Ho) wasserfrei nach DIN EN 15400(PL) von 19.400 kJ/kg oder mehr aufweist. Wie hier verwendet ist die DIN EN 15400(PL) akkreditiert nach ISO/IEC17025:2005 (Akkreditierungsurkunde: D-PL-14087-01-00).

Es ist zudem bevorzugt, dass der erfindungsgemäße Werkstoff einen Heizwert, unterer, wasserfrei nach DIN EN 15400(PL) von 18.200 kJ/kg oder mehr aufweist. Wie hier verwendet ist die DIN EN 15400(PL) akkreditiert nach ISO/IEC17025:2005 (Akkreditierungsurkunde: D-PL-14087-01-00).

Polyurethan im Sinne der vorliegenden Erfindung ist ein Kunststoff bzw. Kunstharz, das durch eine Polyadditionsreaktion von mehrwertigen Alkoholen (Diole, Polyole) mit mehrwertigen Isocyanaten (Diisocyanate, Polyisocyanate) gebildet wird. Polyurethan enthält die sogenannte Urethan-Gruppe (-NH-CO-O-). Wie hier verwendet schließt Polyurethan lineares Polyurethan sowie vernetztes Polyurethan ein.

Papier im Sinne der vorliegenden Erfindung meint Papier im technisch üblichen Sinne. In der Erfindung eingesetztes Papier kann folgende Definitionen einzeln oder gemeinsam erfüllen:
"Papier ist ein flächiger, im Wesentlichen aus Fasern pflanzlicher Herkunft bestehender Werkstoff, der durch die Entwässerung einer Faserstoffaufschwemmung auf einem Sieb gebildet wird. Dabei entsteht ein Faserfilz, der anschließend verdichtet und getrocknet wird." (nach DIN 6730; letzte Version DIN 6730:2011-02)
Und/oder
"Flächiger Werkstoff aus mechanisch, chemisch-thermomechanisch oder chemisch aufgeschlossenen Pflanzenfasern (Holzstoff, Zellstoff, Altpapier). Es ist ein durch Eigenverklebung und Verfilzung von Fasern entstandenes, blattartiges Gebilde".

Im Sinne der vorliegenden Erfindung ist Altpapier der Oberbegriff für Papiere, Pappen und Kartons, die nach Gebrauch erfassbar anfallen. Anfallstellen sind üblicherweise Privathaushalte sowie öffentliche und gewerbliche Einrichtungen. Ferner fallen unter den Begriff Altpapier wie hier verwendet auch gewerbliche Produktionsabfälle aus der Papiererzeugung und -Verarbeitung. In der Praxis werden über 40 Sorten von Altpapier gehandhabt, die beispielsweise in der Liste der europäischen Standardsorten und ihrer Qualitäten (EN 643) normiert sind. Erfindungsgemäß kommt bevorzugt die Standardsorte 1.11 zum Einsatz.

### Kurze Beschreibung der Zeichnungen

Die vorliegende Erfindung wird mit Bezug auf die angefügten Figuren beschrieben. Dabei zeigt
Fig. 1 eine erfindungsgemäß eingesetzte Zusammensetzung einer Vorrichtung zur Verpressung; und
Fig. 2 eine Ansicht der erfindungsgemäß eingesetzten Vorrichtung zur Verpressung während der Aushärtungszeit.

### Detaillierte Beschreibung der Erfindung

Gemäß der vorliegenden Erfindung wird ein Werkstoff bereitgestellt, der vorzugsweise eine oder mehrere der gestellten Aufgaben löst. Der erfindungsgemäße Lösungsansatz besteht darin, ein Gemisch umfassend Papier und Polyurethan, vorzugsweise ein Gemisch bestehend aus Papier und Polyurethan, unter einem bestimmten erhöhten Druck zu verpressen und auf diese Weise einen Werkstoff mit vorteilhaften Eigenschaften wie vergrößerter Härte, thermischer Verwertbarkeit, Freiheit von organischen Lösungsmitteln, Witterungsbeständigkeit, Riss-Resistenz, Schallabsorption und vielfältiger Anwendbarkeit erhältlich zu machen. Weitere Vorteile bestehen darin, dass keine Erdölprodukte, sondern nachwachsende bzw. erneuerbaren Rohstoffe für die Herstellung zum Einsatz kommen.

### Eigenschaften des Werkstoffmaterials

Der erfindungsgemäße Werkstoff umfasst ein Gemisch aus Polyurethan und Papier, wobei vorzugsweise das Polyurethan 5 bis 70 Gew.-%, mehr bevorzugt 10 bis 65 Gew.-%, weiter bevorzugt 15 bis 60 Gew.-%, noch weiter bevorzugt 20 bis 55 Gew.-%, weitergehend bevorzugt 25 bis 50 Gew.-%, darüber hinaus bevorzugt 30 bis 45 Gew.-% und am meisten bevorzugt 35 bis 40 Gew.-% des Gesamtgewichts des Gemisches aus Polyurethan und Papier und das Papier die übrigen Gew.-%, d.h. die jeweilige Differenz gegenüber 100 Gew.-% des Gesamtgewichts des Gemisches aus Polyurethan und Papier ausmacht. Ein erfindungsgemäß gut geeignetes Mengenverhältnis von Papier zu Polyurethan ist außerdem z.B. 75 Gew.-% zu 25 Gew.-%, beispielsweise 75 kg zu 25 kg, wobei eine geringere Polyurethanmenge eine wesentlich höhere Rentabilität gewährt. Ein Mischungsverhältnis von 50 Gew.-% Polyurethan zu 50 Gew.-% Papier ist noch geeignet, größere Mengen an Polyurethan sind gewöhnlich aufgrund wirtschaftlicher Erwägungen nachteilig.

Der erfindungsgemäße Werkstoff weist vorzugsweise eine Zugfestigkeit in Faserrichtung angelehnt an die ÖNORM EN 408 - Holzbauwerke -Bauholz für tragende Zwecke und Brettschichtholz (Ausgabe 2010-12-01, Punkt 13) im Bereich von 40 N/mm² bis 100 N/mm² auf.

Der erfindungsgemäße Werkstoff weist vorzugsweise eine Druckfestigkeit in Faserrichtung angelehnt an die ÖNORM EN 408 - Holzbauwerke -Bauholz für tragende Zwecke und Brettschichtholz (Ausgabe 2010-12-01, Punkt 15) im Bereich von 30 N/mm² bis 80 N/mm² auf.

Der erfindungsgemäße Werkstoff weist vorzugsweise eine Biegefestigkeit in Faserrichtung angelehnt an die ÖNORM EN 408 - Holzbauwerke -Bauholz für tragende Zwecke und Brettschichtholz (Ausgabe 2010-12-01, Punkt 19) im Bereich von 40 N/mm² bis 120 N/mm² auf.

Der erfindungsgemäße Werkstoff weist vorzugsweise einen Brennwert (Ho) wasserfrei nach DIN EN 15400(PL) von mindestens 15.000 kJ/kg, mehr bevorzug von mindestens 16.000 kJ/kg, noch mehr bevorzugt von mindestens 17.000 kJ/kg, weitergehend bevorzugt von mindestens 18.000 kJ/kg und am meisten bevorzugt von 19.400 kJ/kg oder mehr auf. Wie hier verwendet ist die DIN EN 15400(PL) akkreditiert nach ISO/IEC17025:2005 (Akkreditierungsurkunde: D-PL-14087-01-00).

Der erfindungsgemäße Werkstoff weist vorzugsweise einen Heizwert, unterer, wasserfrei nach DIN EN 15400(PL) von mindestens 14.000 kJ/kg, mehr bevorzug von mindestens 15.000 kJ/kg, noch mehr bevorzugt von mindestens 16.000 kJ/kg, weitergehend bevorzugt von mindestens 17.000 kJ/kg und am meisten bevorzugt von 18.200 kJ/kg oder mehr auf. Wie hier verwendet ist die DIN EN 15400(PL) akkreditiert nach ISO/IEC17025:2005 (Akkreditierungsurkunde: D-PL-14087-01-00).

Ein bevorzugter erfindungsgemäßer Werkstoff weist entsprechend eine Zugfestigkeit im Bereich von 40 N/mm² bis 100 N/mm², eine Druckfestigkeit im Bereich von 30 N/mm² bis 80 N/mm² und eine Biegefestigkeit in Faserrichtung im Bereich von: von 40 N/mm² bis 120 N/mm² auf, jeweils bestimmt wie vorstehend angegeben.

Ein ebenfalls bevorzugter erfindungsgemäßer Werkstoff weist entsprechend einen Brennwert von 19.400 kJ/kg oder mehr und einen Heizwert von 18.200 kJ/kg oder mehr auf, jeweils bestimmt wie vorstehend angegeben.

Ein besonders bevorzugter erfindungsgemäßer Werkstoff weist eine Zugfestigkeit im Bereich von 40 N/mm² bis 100 N/mm², eine Druckfestigkeit im Bereich von 30 N/mm² bis 80 N/mm², eine Biegefestigkeit in Faserrichtung im Bereich von 40 N/mm² bis 120 N/mm², einen Brennwert von 19.400 kJ/kg oder mehr und einen Heizwert von 18.200 kJ/kg oder mehr auf, jeweils bestimmt wie vorstehend angegeben.

Gesondert stellt die vorliegende Erfindung zudem einen Werkstoff aus einem Gemisch umfassend und vorzugsweise bestehend aus Polyurethan und Papier bereit, der eine Zugfestigkeit in Faserrichtung angelehnt an die ÖNORM EN 408 - Holzbauwerke -Bauholz für tragende Zwecke und Brettschichtholz (Ausgabe 2010-12-01, Punkt 13) im Bereich von 40 N/mm² bis 100 N/mm² aufweist.

Gesondert stellt die vorliegende Erfindung zudem einen Werkstoff aus einem Gemisch umfassend und vorzugsweise bestehend aus Polyurethan und Papier bereit, der eine Druckfestigkeit in Faserrichtung angelehnt an die ÖNORM EN 408 - Holzbauwerke -Bauholz für tragende Zwecke und Brettschichtholz (Ausgabe 2010-12-01, Punkt 15) im Bereich von 30 N/mm² bis 80 N/mm² aufweist.

Gesondert stellt die vorliegende Erfindung zudem einen Werkstoff aus einem Gemisch umfassend und vorzugsweise bestehend aus Polyurethan und Papier bereit, der eine Biegefestigkeit in Faserrichtung angelehnt an die ÖNORM EN 408 - Holzbauwerke -Bauholz für tragende Zwecke und Brettschichtholz (Ausgabe 2010-12-01, Punkt 19) im Bereich von 40 N/mm² bis 120 N/mm² aufweist.

Gesondert stellt die vorliegende Erfindung zudem einen Werkstoff aus einem Gemisch umfassend und vorzugsweise bestehend aus Polyurethan und Papier bereit, der einen Brennwert (Ho) wasserfrei nach DIN EN 15400(PL) von mindestens 15.000 kJ/kg, mehr bevorzug von mindestens 16.000 kJ/kg, noch mehr bevorzugt von mindestens 17.000 kJ/kg, weitergehend bevorzugt von mindestens 18.000 kJ/kg und am meisten bevorzugt von 19.400 kJ/kg oder mehr aufweist. Wie hier verwendet ist die DIN EN 15400(PL) akkreditiert nach ISO/IEC17025:2005 (Akkreditierungsurkunde: D-PL-14087-01-00).

Gesondert stellt die vorliegende Erfindung zudem einen Werkstoff aus einem Gemisch umfassend und vorzugsweise bestehend aus Polyurethan und Papier bereit, der einen Heizwert, unterer, wasserfrei nach DIN EN 15400(PL) von mindestens 14.000 kJ/kg, mehr bevorzug von mindestens 15.000 kJ/kg, noch mehr bevorzugt von mindestens 16.000 kJ/kg, weitergehend bevorzugt von mindestens 17.000 kJ/kg und am meisten bevorzugt von 18.200 kJ/kg oder mehr aufweist. Wie hier verwendet ist die DIN EN 15400(PL) akkreditiert nach ISO/IEC17025:2005 (Akkreditierungsurkunde: D-PL-14087-01-00).

Gesondert stellt die vorliegende Erfindung zudem einen Werkstoff aus einem Gemisch umfassend und vorzugsweise bestehend aus Polyurethan und Papier bereit, der eine Zugfestigkeit (angelehnt an die ÖNORM EN 408 - Holzbauwerke-Bauholz für tragende Zwecke und Brettschichtholz, Ausgabe 2010-12-01, Punkt 13) im Bereich von 40 N/mm² bis 100 N/mm², eine Druckfestigkeit (angelehnt an die ÖNORM EN 408 - Holzbauwerke-Bauholz für tragende Zwecke und Brettschichtholz, Ausgabe 2010-12-01, Punkt 15) im Bereich von 30 N/mm² bis 80 N/mm² und eine Biegefestigkeit (angelehnt an die ÖNORM EN 408 - Holzbauwerke-Bauholz für tragende Zwecke und Brettschichtholz, Ausgabe 2010-12-01, Punkt 19) in Faserrichtung im Bereich von 40 N/mm² bis 120 N/mm² aufweist.

Gesondert stellt die vorliegende Erfindung zudem einen Werkstoff aus einem Gemisch umfassend und vorzugsweise bestehend aus Polyurethan und Papier bereit, der einen Brennwert (Ho) wasserfrei nach DIN EN 15400(PL) von 19.400 kJ/kg oder mehr und einen Heizwert, unterer, wasserfrei nach DIN EN 15400(PL) von 18.200 kJ/kg oder mehr aufweist. Wie hier verwendet ist die DIN EN 15400(PL) akkreditiert nach ISO/IEC17025:2005 (Akkreditierungsurkunde: D-PL-14087-01-00).

Gesondert stellt die vorliegende Erfindung zudem einen Werkstoff aus einem Gemisch umfassend und vorzugsweise bestehend aus Polyurethan und Papier bereit, der eine Zugfestigkeit (angelehnt an die ÖNORM EN 408 - Holzbauwerke-Bauholz für tragende Zwecke und Brettschichtholz, Ausgabe 2010-12-01, Punkt 13) im Bereich von 40 N/mm² bis 100 N/mm², eine Druckfestigkeit (angelehnt an die ÖNORM EN 408 - Holzbauwerke-Bauholz für tragende Zwecke und Brettschichtholz, Ausgabe 2010-12-01, Punkt 15) im Bereich von 30 N/mm² bis 80 N/mm², eine Biegefestigkeit (angelehnt an die ÖNORM EN 408 - Holzbauwerke-Bauholz für tragende Zwecke und Brettschichtholz, Ausgabe 2010-12-01, Punkt 19) in Faserrichtung im Bereich von 40 N/mm² bis 120 N/mm², einen Brennwert (Ho) wasserfrei nach DIN EN 15400(PL) von 19.400 kJ/kg oder mehr und einen Heizwert, unterer, wasserfrei nach DIN EN 15400(PL) von 18.200 kJ/kg oder mehr aufweist. Wie hier verwendet ist die DIN EN 15400(PL) akkreditiert nach ISO/IEC17025:2005 (Akkreditierungsurkunde: D-PL-14087-01-00).

### Papier

Zur Herstellung des Werkstoffs werden Papierschnipsel erzeugt. Aus ökologischen wie auch wirtschaftlichen Gründen bietet sich hiermit Altpapier in Form von Zeitungen, Zeitschriften, Illustrierten usw. an. Diese werden beispielsweise mechanisch in die entsprechende Größe gehackt. Die bevorzugte Größe liegt bei etwa bevorzugt 0,01 bis 60 cm², mehr bevorzugt 0,05 bis 6 cm², noch mehr bevorzugt 0,10 bis 5 cm², weitergehend bevorzugt 0,20 bis 4,50 cm², noch weiter bevorzugt 0,25 bis 4,00 cm², insbesondere bevorzugt 0,50 bis 3,50 cm², besonders bevorzugt 1,00 bis 3,00 und am meisten bevorzugt 1,50 bis 2,50 cm². Speziell im Hinblick auf Druckfestigkeit und Quell-Schwindverhalten sind derartige Papierschnipsel bevorzugt.

Zusätzlich oder alternativ werden erfindungsgemäß jedoch auch Kartonprodukte verwendet. Wichtig sind hierbei die zu erreichenden Festigkeitswerte, da Karton in der Regel eine geringere Dichte bzw. höhere Porigkeit aufweist.

### Produktionsfluss

Der folgende Ablaufplan erklärt beispielhafte Schritte zur Herstellung eines erfindungsgemäßen Werkstoffs.

Einlagerung von Füllmaterial - Papier (beispielsweise gesammeltes Altpapier) in entsprechend klimatisierten (speziell berücksichtigt Feuchtigkeit) Bunkern. Gemäß der benötigten Produktionsmenge an Papier erfolgt die automatische Entnahme durch beispielsweise eine Krananlage zur Beschickung des Zerkleinerers (etwa erhältlich von Lindner-Recyclingtech GmbH). Die daraus erhaltenen Papierschnipsel (PS) werden in einem PS-Tank, welcher als Puffer (Buffer) zur Produktionslinie geschalten ist, aufgefangen. Über Rohrleitungen werden die PS abgesaugt und zu den Produktionslinien transportiert.

Der gelieferte Polyurethanklebstoff (PU) wird in entsprechenden Silotanks eingelagert wie auch die ggf. benötigten Zusätze (Zusätze zur Verbesserung der UV-Beständigkeit, zur Beschleunigung der Aushärtezeit, usw.). Über Rohrleitungen erfolgen die Zubringungen des PU, sowie ggf. entsprechend getrennt davon die dazugehörigen Zusätze, zu den einzelnen Produktionslinien.

Die Produktionslinien sind bis auf die Versorgung mit den Produkt-Komponenten in Ihrer Arbeitsweise autark. Bei der Produktionslinie erfolgt die Mischung der PS mit dem PU. Im Anschluss erfolgt direkt die Mengenkommissionierung entsprechend der benötigten Menge zur Füllung der Aushärtungsform (AF). Durch einen statischen Zwangsmischer wird die Masse mittels hydraulischer Kraft in die AF gepresst. Der angewandte Pressdruck liegt zur Erzielung einer ausreichenden Festigkeit bei mindestens 20 bar, weiter bevorzugt mindestens über 20 bar. Zur Vermeidung eines übermäßigen seitlichen Ausquellens von Polyurethan liegt der angewandte Pressdruck ferner bevorzugt bei höchstens 1500 bar, weiter bevorzugt unter 1500 bar. Der optimale Arbeitsbereich für den Pressdruck liegt damit in einem Bereich von gleich oder größer 20 bar bis gleich oder kleiner 1500 bar. Außerdem erfolgt in diesem Schritt, sofern erforderlich, die Beimischung des Zusatzes für eine Beschleunigung der Aushärtezeit. Dieser Vorgang bzw. die Befüllung der AF erfolgt vorzugsweise minütlich. Zuvor wurde die AF mit Stickstoff ausgeblasen, um die Luft und den damit verbundenen Wassergehalt (H2O) zu entfernen.

Die AF in der Produktionslinie befindet sich auf einem zyklischen Weg. Durch eine Vielzahl an AF pro Produktionslinie (etwa 30 Stück pro Linie) erfolgt die Aushärtung in der Form, wobei kurz vor der wiederholten Befüllung der automatische Auswurf des fertigen Produktes erfolgt.

Auf entsprechenden Förderanlagen wird der fertige Werkstoff dann weiter geliefert, kommissioniert und eingelagert.

### Ausführungsbeispiel

### Faserkomponente - Papier: Herstellung von Papierschnipseln mittels Gartenhacker aus Zeitungen.

Die Zeitungen werden in den Gartenhacker als Ganzes eingebracht. Durch die rotierenden Messerscheiben und Klingen im Gartenhacker werden die Zeitungen zerkleinert. Sollten die erhaltenen Papierschnipsel noch zu groß sein, so kann der Vorgang auch mehrmals wiederholt werden. Die erhaltenen Papierschnipsel werden ein weiteres Mal in den Gartenhacker gegeben. Der benötigte Gewichtsanteil für das geplante Bauteil wird in einen Kübel (15 Liter Volumen) gegeben und mittels Waage eingemessen (im Beispiel 200g Papierschnipsel).

### Kleberkomponente - Polyurethankleber: Abmischen der Klebstoffkomponenten

Die einzelnen Klebstoffkomponenten werden mittels Waage im richtigen Verhältnis wie auch der richtigen Menge in einem Becher (0,5 Liter Volumen) zusammengemengt. Die erhaltene Klebstoffmenge (im Beispiel 200g) wird dann gut verrührt entsprechend der Vorgaben des Klebstoffherstellers.

In diesem Ausführungsbeispiel kommt dabei das Produkt LOCTITE UK 8101 / LOCTITE UK 5400 der Firma Henkel zum Einsatz. LOCTITE UK 8101 / LOCTITE UK 5400 hat die folgenden Produkteigenschaften:
Technologie Polyurethan - Produkttyp PU-Klebstoff
Aushärtung: Polyaddition - Beschaffenheit: Lösungsmittelfrei
Komponenten: zwei-komponentig
Komponente A - Harz
Komponente B - Härter

### Anwendung

Farbe (Komp. A): Beige
Farbe (Komp. B): Braun

### Mischungsverhältnis, nach Gewicht

Komp. A : Komp. B = 4 : 1

### Mischungsverhältnis, nach Volumen

Komp. A : Komp. B = 3,4 : 1

LOCTITE UK 8101 / LOCTITE UK 5400 ist ein lösungsmittelfreier Zweikomponenten-Klebstoff auf Polyurethanbasis. Die Harzkomponente (Komponente A) ist auf Basis hydroxylgruppenhaltiger organischer Verbindungen, die Härterkomponente (Komponente B) auf Basis von Isocyanaten aufgebaut. Durch Vermischen der beiden Komponenten im Mischverhältnis 4 : 1 entsteht aufgrund einer chemischen Reaktion ein hartelastischer Klebstoff. Das Produkt weist nach der Aushärtung keine messbare Volumenänderung auf.

### Komponente A - Loctite UK 8101:

Konsistenz: flüssig
Dichte, g/cm³: 1,4 bis 1,5
Viskosität, Brookfield - RVT, 20°C, mPa.s: 6.000 bis 10.000

### Komponente B - Loctite UK 5400:

Konsistenz: dünnflüssig
Dichte, g/cm³: 1,17 bis 1,27
Viskosität, Brookfield - RVT, 20°C, mPa.s: 250 bis 350

### Mischung (Komponente A + B):

Konsistenz: flüssig
Viskosität, Brookfield - RVT, 25°C, mPa.s: 2.500 bis 2.800
Topfzeit (125g, 20 °C), min: 50 bis 70
Offene Zeit, min: 120 bis 150
Aushärtezeit (23°C), Tage: 5 bis 7
Anfangsfestigkeit (23 °C), Std.: 5 bis 8
Zugscherfestigkeit, MPa (EN 1465): >6
Gebrauchstemperatur, °C: -40 bis 80

### Verarbeitung:

Komponente A wird vor der Verarbeitung langsam aufgerührt bis sie homogen ist. Die Komponenten werden von Hand, mit Rührvorrichtung oder Zweikomponenten-Mischanlagen im angegebenen Mischungsverhältnis gemischt. Dabei sollte das Einbringen von Luft vermieden werden. Nach dem Mischen sollen keine Schlieren erkennbar sein. Der Klebstoff kann nur eine begrenzte Zeit appliziert werden (Topfzeit). Danach geliert die Mischung und wird für die Verarbeitung unbrauchbar. Es wird deshalb nur die Menge angemischt, die innerhalb der Topfzeit verarbeitet werden kann. Die Topfzeit ist abhängig von der Menge und Temperatur des Ansatzes. Bei größeren Mengen oder erhöhten Temperaturen wird die Topfzeit verkürzt. Niedrige Temperaturen hingegen verlängern die Topfzeit. Die Klebstoffkomponenten sollen vor und während der Verarbeitung nicht mit Feuchtigkeit in Berührung kommen.

### Aushärtung:

LOCTITE UK 8101 / LOCTITE UK 5400 kann bei Raumtemperatur oberhalb von 15°C und erhöhter Temperatur (bis 60°C) ausgehärtet werden. Die Härtungszeiten werden durch Temperaturerhöhung oder die Zugabe eines Beschleunigers wie z.B. LOCTITE UK 6100 reduziert, wobei die gleichzeitige Verkürzung der Verarbeitungszeit (Cremezeit, offene Zeit) zu beachten ist. Während der Abbindezeit (Anfangsfestigkeit) ist auf ausreichend Kontaktdruck (Stapeldruck, Pressen, Klammern) zu achten, damit die zu verklebenden Teile mit dem Klebstoff vollflächig in Kontakt gehalten werden.

### Mischung der Komponenten: Zusammenführung / Mischen der Faser- und Kleberkomponente

Zu den Faserkomponenten im Kübel wird nun die erhaltene Klebstoffkomponente möglichst regelmäßig eingemischt. Durch knetartige Bewegungen im Kübel mit den Händen werden somit die Komponenten besser und gleichmäßig vermengt. Wenn die Vermengung dann gleichmäßig ist, hat man das Grundmaterial (im Beispiel 400g) erhalten.

### Verpressen des Grundmaterials

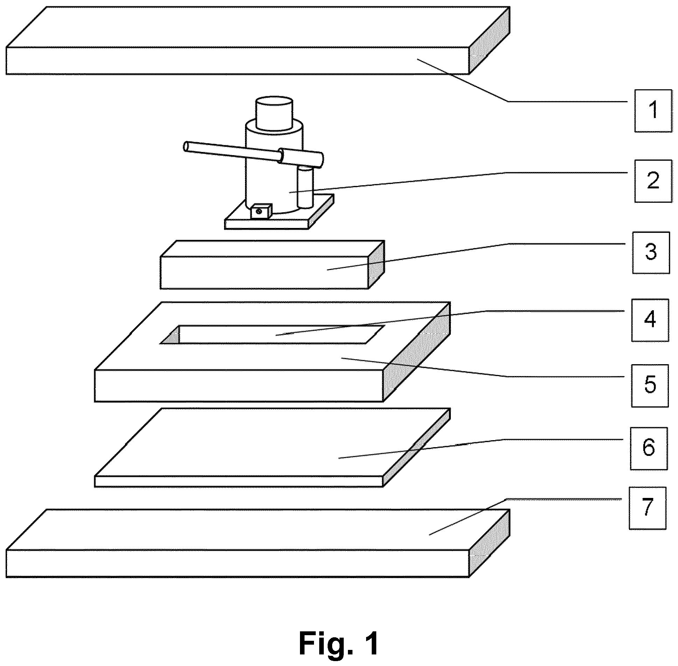

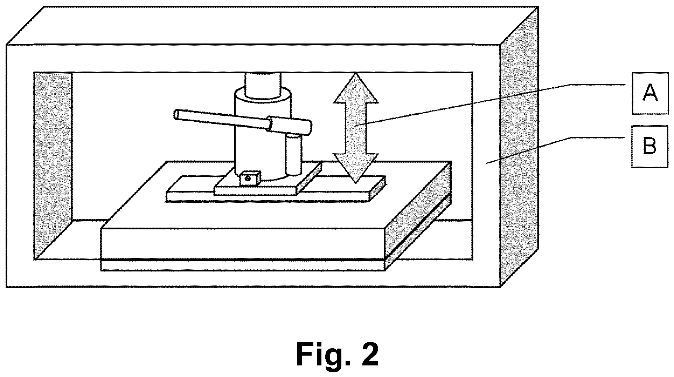

Es wird Bezug auf die Figuren 1 und 2 genommen. Die Grundplatte kommt auf das Untere- Widerlager **7.** Auf die Grundplatte **6** wird die Pressform **5** aufgelegt. Das zuvor zubereitete Grundmaterial wird nun aus dem Kübel genommen und gleichmäßig in die Ausnehmung **4** der Pressform **5** eingebracht. Die Ausnehmung **4** (im Beispiel 270 mm Länge und 35 mm Breite) geht durch die gesamte Pressform **5** wie ein Durchgangsloch (im Beispiel ist dies eine Dicke/Tiefe von 40 mm). Die Gegenform **3** entspricht genau der Ausnehmung der Pressform **5.** Mit der Gegenform **3** wird nun das Grundmaterial verdichtet. Die dazu notwendige Kraft wird mit einem hydraulischen Wagenheber **2** eingebracht bis der notwenige Verpressungsdruck (im Beispiel 155 bar) erreicht ist. Für die Aufnahme der Kräfte und zum Erreichen des Pressdruckes **A** erfolgt die Verwendung eines massiven Stahlrahmens **B.** Unter diesem Druck erfolgt dann das Aushärten des Grundmaterials innerhalb der entsprechenden Aushärtungszeit, verbunden mit der herrschenden Raum- bzw. Bauteiltemperatur. Nach Ablauf der Aushärtungszeit wird der Pressdruck **A** gelöst und der Aufbau kann wieder zerlegt / vereinzelt werden, um das fertige Produkt (im Beispiel 400g Masse, 270 mm Länge, 35 mm Breite, 26 mm Dicke) zu erhalten.

### Bezugszeichenliste

- 1.: Oberes- Widerlager - zur Aufnahme des Pressdruckes nach oben
- 2.: Hydraulischer Wagenheber
- 3.: Gegenform - welche genau in die Ausnehmung der Pressform passt
- 4.: Ausnehmung - Einfüllen des Grundmaterials
- 5.: Pressform - mit Ausnehmung
- 6.: Grundplatte
- 7.: Unteres- Widerlager - zur Aufnahme des Pressdruckes nach unten

- A.: Pressdruck - Hub welcher durch den hydraulischen Wagenheber erzeugt wird
- B.: Stahlrahmen - zur Aufnahme der Kräfte durch den Pressdruck als Oberes- und Unteres- Widerlager

## Patentansprüche

1. Werkstoff, erhältlich durch Verpressen eines Gemisches umfassend Polyurethan und Papier unter einem Druck von mindestens 20 bar.

2. Werkstoff nach Anspruch 1, erhältlich durch Verpressen unter einem Druck von über 20 bar.

3. Werkstoff nach Anspruch 1 oder 2, erhältlich durch Verpressen unter einem Druck von höchstens 1500 bar, bevorzugt unter einem Druck von unter 1500 bar.

4. Werkstoff nach Anspruch 1 erhältlich durch Verpressen unter einem Druck von mindestens gleich oder größer 20 bar bis hin zu einem Druck von gleich oder kleiner 1500 bar.

5. Werkstoff nach einem der vorangehenden Ansprüche, wobei das Polyurethan vorzugsweise 5 bis 70 Gew.-%, mehr bevorzugt 10 bis 65 Gew.-%, weiter bevorzugt 15 bis 60 Gew.-%, noch weiter bevorzugt 20 bis 55 Gew.-%, weitergehend bevorzugt 25 bis 50 Gew.-%, darüber hinaus bevorzugt 30 bis 45 Gew.-% und am meisten bevorzugt 35 bis 40 Gew.-% des Gesamtgewichts des Gemisches aus Polyurethan und Papier und das Papier die übrigen Gew.-%, d.h. die jeweilige Differenz gegenüber 100 Gew.-% des Gesamtgewichts des Gemisches aus Polyurethan und Papier ausmacht.

6. Werkstoff nach einem der vorangehenden Ansprüche, wobei das Papier aus Altpapier besteht.

7. Werkstoff nach einem der vorangehenden Ansprüche, wobei das Papier aus Papierschnipseln mit einer mittleren Größe von bevorzugt 0,01 bis 60 cm², mehr bevorzugt 0,05 bis 6 cm², noch mehr bevorzugt 0,10 bis 5 cm², weitergehend bevorzugt 0,20 bis 4,50 cm², noch weiter bevorzugt 0,25 bis 4,00 cm², insbesondere bevorzugt 0,50 bis 3,50 cm², besonders bevorzugt 1,00 bis 3,00 und am meisten bevorzugt 1,50 bis 2,50 cm² besteht.

8. Werkstoff nach einem der vorangehenden Ansprüche, der ausschließlich aus dem Gemisch aus Polyurethan und Papier besteht.

9. Werkstoff nach einem der vorangehenden Ansprüche, der eine Zugfestigkeit in Faserrichtung angelehnt an die ÖNORM EN 408 - Holzbauwerke -Bauholz für tragende Zwecke und Brettschichtholz (Ausgabe 2010-12-01, Punkt 13) im Bereich von 40 N/mm² bis 100 N/mm² aufweist.

10. Werkstoff nach einem der vorangehenden Ansprüche, der eine Druckfestigkeit in Faserrichtung angelehnt an die ÖNORM EN 408 - Holzbauwerke -Bauholz für tragende Zwecke und Brettschichtholz (Ausgabe 2010-12-01, Punkt 15) im Bereich von 30 N/mm² bis 80 N/mm² aufweist.

11. Werkstoff nach einem der vorangehenden Ansprüche, der eine Biegefestigkeit in Faserrichtung angelehnt an die ÖNORM EN 408 - Holzbauwerke -Bauholz für tragende Zwecke und Brettschichtholz (Ausgabe 2010-12-01, Punkt 19) im Bereich von 40 N/mm² bis 120 N/mm² aufweist.

12. Werkstoff nach einem der vorangehenden Ansprüche, der einen Brennwert (Ho) wasserfrei nach DIN EN 15400(PL) von 19.400 kJ/kg oder mehr aufweist, wobei die DIN EN 15400(PL) nach ISO/IEC17025:2005 akkreditiert ist (Akkreditierungsurkunde: D-PL-14087-01-00).

13. Werkstoff nach einem der vorangehenden Ansprüche, der einen Heizwert, unterer, wasserfrei nach DIN EN 15400(PL) von 18.200 kJ/kg oder mehr aufweist, wobei die DIN EN 15400(PL) nach ISO/IEC17025:2005 akkreditiert ist (Akkreditierungsurkunde: D-PL-14087-01-00).
